# EUROPÄISCHE PATENTSCHRIFT

(11) **EP 1 509 708 B1**
(45) Veröffentlichungstag und Bekanntmachung des Hinweises auf die Patenterteilung: **25.10.2006**
(21) Anmeldenummer: 03755917.6
(22) Anmeldetag: 27.05.2003
(51) Int. Cl.: F16H 21/30, F16H 1/28

(54) **GETRIEBEVORRICHTUNG MIT EINER AN DER LAGERACHSE DES PLANETENRADES ANGEORDNETEN EXZENTRISCHEN KRAFTÜBERTRAGUNGSACHSE**
TRANSMISSION DEVICE COMPRISING AN ECCENTRIC POWER TRANSMISSION AXLE THAT IS DISPOSED ON THE BEARING AXLE
DISPOSITIF D'ENGRENAGE DOTE D'UN ARBRE DE TRANSMISSION MONTE EXCENTRIQUE SUR L'AXE DE PALIER DU PIGNON SATELLITE

(30) Priorität: 31.05.2002 DE 10224999
(43) Veröffentlichungstag der Anmeldung: 02.03.2005
(73) Patentinhaber: Plath, Klaus, 08132 Mülsen (DE)
(72) Erfinder: Plath, Klaus, 08132 Mülsen (DE)
(74) Vertreter: Freiherr von Schorlemer, Reinfried
(86) Internationale Anmeldenummer: PCT/DE2003/001784
(87) Internationale Veröffentlichungsnummer: WO 2003/102446

(56) Entgegenhaltungen:
- DE-B- 1 200 629
- DE-B- 1 208 586
- US-A- 5 482 015
- US-A1- 2002 091 030

## Beschreibung

Die Erfindung betrifft eine Getriebevorrichtung der im Oberbegriff des Anspruchs 1 angegebenen Gattung.

Getriebevorrichtungen dieser Art sind in der Regel als Planetengetriebe ausgebildet (z.B. Johannes Looman "Grundlagen, Konstruktionen, Anwendungen in Fahrzeugen", 3. Auflage, Band 26). Derartige Planetengetriebe weisen in ihrer einfachsten Bauweise eine erste Bahn in Form des Außenumfangs eines Sonnenrades, eine zweite Bahn in Form des Innenmantels eines das Sonnenrad umgebenden Hohlrads und wenigstens ein zwischen diesen Bahnen angeordnetes, an einem Plantenradträger (Steg) drehbar gelagertes Planetenrad auf. Das Planetenrad steht an seinem Umfang sowohl mit dem Sonnenrad als auch mit dem Hohlrad in Wirkverbindung, worunter hier z.B. ein Zahneingriff (Zahnrädergetriebe) oder eine rollende Anlage (Reibradgetriebe) verstanden wird.

Der Antrieb bzw. Abtrieb bei derartigen Planetengetrieben erfolgt z.B. dadurch, daß entweder bei festgehaltenem Sonnenrad das Hohlrad oder bei festgehaltenem Hohlrad das Sonnenrad angetrieben und die dadurch vom Planetenrad auf den Planetenradträger übertragene Drehbewegung genutzt wird. Umgekehrt kann aber auch der Planetenradträger angetrieben und die dadurch erzeugte Drehbewegung auf das Sonnen- oder Hohlrad übertragen werden.

Die Kraftübertragung im Bereich des Trägers erfolgt unabhängig davon, ob dieser als Antriebs- oder Abtriebselement des Getriebes genutzt wird, über die im Zentrum des Planetenrades befindliche Lagerachse, um die das Planetenrad drehbar am Träger gelagert ist. Lagerachse und Kraftübertragungsachse fallen somit zusammen. Das gilt im Prinzip auch dann, wenn alle vorhandenen Kraftübertragungsächsen mit geringen Abständen von den Drehachsen der zugehörigen Planetenräder, d. h. exzentrisch an deren Lagerachsen angeordnet sind, wie dies bei dem gattungsgemäßen Getriebevorrichtungen der Fall ist (DE-A-1 200 629). Bei derartigen Getriebevorrichtungen- sind die exzentrisch angeordneten Kraftübertragungsachsen über zusätzliche Verbindungshebel mit einer gemeinsamen Scheibe verbunden, um durch Herstellungsungenauigkeiten verursachte ungleichförmige Zahndrücke der Planetenräder auszugleichen bzw. trotz dieser Ungenauigkeiten gleichförmige Kraftverteilungen bei allen vorhandenen Planetenrädern zu erzielen.

Abweichend davon ist es bei Kurbeltrieben bekannt, auf einer Kurbelscheibe ein Sonnenrad und ein mit diesem in Wirkverbindung stehendes Planetenrad anzuordnen und das Planetenrad mit einer exentrisch zu seiner Lagerachse angeordneten Kraftübertragungsachse zu versehen, die mit dem einen Ende einer Pleuelstange gekoppelt ist (PCT-WO 88/08095). Ein für die Praxis schwerwiegendes Problem besteht dabei darin, daß die Kraftübertragungsachse wegen der beim Umlauf um das Sonnenrad erfolgenden Eigenrotation des Planetenrades nicht einer Kreisbahn, sondern einer komplizierten, meistens zykloidartigen Bahnkurve folgt. Diese Bahnkurve kann zwar durch Optimierung der Sonnen- und Planetenraddurchmesser einer elliptischen Bahn angenähert werden. Die Realisierung einer an sich gewünschten Kreisbahn ist bei derartigen Getrieben aber nicht möglich. Ebenso wenig möglich wäre die Realisierung z.B. einer linearen Bewegungsbahn der Kraftübertragungsachse für den Fall, daß es sich bei den an den beiden Seiten des Planetenrades angeordneten Bahnen um geradlinige Bahnen handelt.

Bei derartigen Getrieben ist daher bisher eine Kreisbahn für die Kraftübertragungsachse nur dann erreichbar, wenn letztere mit der Lagerachse des Planetenrades zusammenfällt, die gleichzeitig auch mit der Drehachse des Planetenrades übereinstimmt. Das hat zur Folge, daß eine auf die Kraftübertragungsachse ausgeübte Kraft je zur Hälfte auf die Wirkverbindung zwischen dem Sonnenrad und dem Planetenrad und die Wirkverbindung zwischen dem Planetenrad und dem Hohlrad aufgeteilt wird und daher nur zur Hälfte auf das Sonnenrad bzw. Hohlrad übertragen und damit nutzbar gemacht werden kann. Außerdem ist der Weg, der bei einer Umdrehung des Planetenrades um die Mittelachse des Planetengetriebes auf das Hohlrad übertragen wird, stets doppelt so groß wie der Weg, den die Lager- bzw. Kraftübertragungsachse des Planetenrades dabei um die Mittelachse des Planetengetriebes beschreibt. Daher kommt es bei der Kraftein- bzw. Kraftableitung an der Lagerachse zu einer Halbbierung der Kräfte bei Verdoppelung des zurückgelegten Wegs bzw. umgekehrt. Mit anderen Worten wird eine auf die Kraftübertragungsachse ausgeübte Kraft z.B. nur zur Hälfte auf das Hohlrad übertragen, das dabei den doppelten Weg wie die Kraftübertragungsachse zurücklegt.

Diese Gegebenheiten sind bei der Konstruktion von Planetengetrieben und vergleichbaren Getrieben nicht veränderbar. Daraus ergeben sich für die praktische Anwendung, insbesondere auch im Hinblick auf die übertragbaren Drehmomente und die möglichen Übersetzungsverhältnisse, zahlreiche Unbequemlichkeiten.

Demgegenüber besteht das technische Problem der vorliegenden Erfindung darin, die Getriebevorrichtung der eingangs bezeichneten Gattung so auszubilden, daß sie flexibler als bisher dimensioniert, die Kraftübertragung verbessert und dennoch je nach Bedarf eine kreisförmige oder lineare Bahn für die Kraftübertragungsachse realisiert werden kann.

Zur Lösung dieser Aufgabe dienen die kennzeichnenden Merkmale des Anspruchs 1.

Die Erfindung bringt den Vorteil mit sich, daß die Kraftübertragungsachse trotz ihrer exzentrischen Anordnung auf der Lagerachse stets auf einer Bahn geführt werden kann, auf der auch der Planetenradträger bewegt wird. Außerdem ergeben sich günstige Kraftübertragungsverhältnisse, da die Kraftübertragungsachse je nach Bedarf viel näher als bisher an der bewegten Bahn oder an der stationären Bahn angeordnet werden kann. Die neue Getriebevorrichtung ermöglicht damit viele bisher nicht realisierbare Konstruktionen sowie die Anwendung kleinerer oder größerer Planeten- und Hohlräder bei sonst gleichen Verhältnissen.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische Darstellung eines üblichen Planetengetriebes mit fest stehendem Sonnenrad;
Fig. 2 eine schematische Darstellung einer erfindungsgemäßen Getriebevorrichtung in Form eines Planetengetriebes mit fest stehendem Sonnenrad;
Fig. 3 eine schematischen Querschnitt durch das Planetengetriebe nach Fig. 2;
Fig. 4 eine Lagerachse des Planetengetriebes nach Fig. 2 und 3 mit einer schematisch angedeuteten, radial verschiebbaren Kraftübertragungsachse;
Fig. 5 und 6 schematische Vorderansichten von Antriebsmöglichkeiten für das erfindungsgemäße Planetengetriebe;
Fig. 7 und 8 schematische Ausführungsformen von Lagerachsen des erfindungsgemäßen Planetengetriebes;
Fig. 9 bis 11 in einem schematischen Vergleich die Vorderansichten je eines bekannten und erfindungsgemäßen Planetengetriebes sowie eines bekannten Kurbeltriebs;
Fig. 12 eine schematische Vorderansicht einer erfindungsgemäßen Getriebevorrichtung in Linearanordnung; und
Fig. 13 und 14 schematische Vorderansichten von zwei weiteren Ausführungsbeispielen einer erfindungsgemäßen Getriebevorrichtung in Linearanordnung.

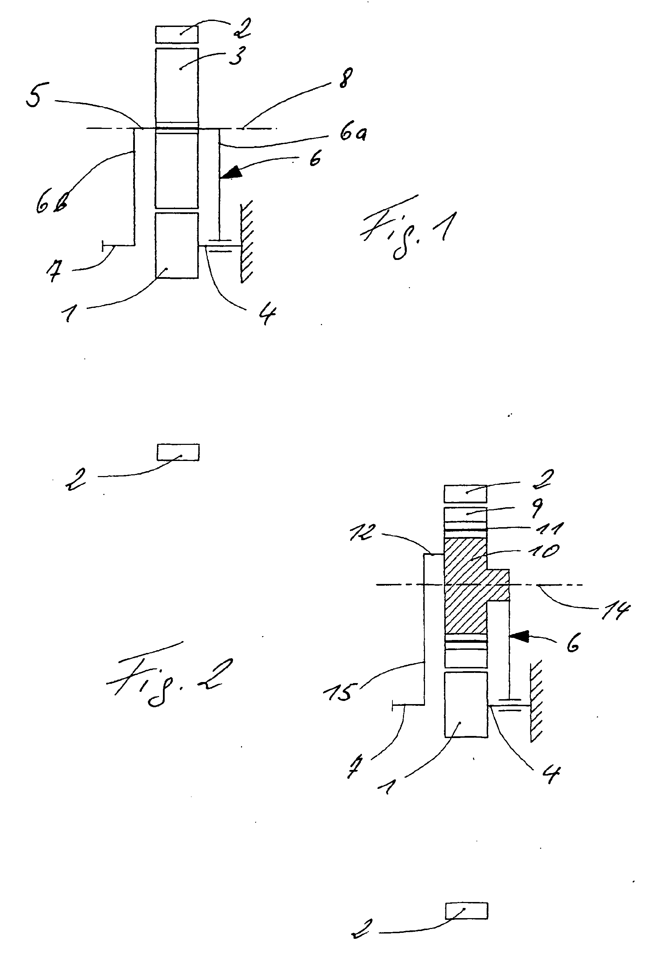

Nach Fig. 1 enthält eine übliche Getriebevorrichtung in Form eines Planetengetriebes ein Sonnenrad 1, ein Hohlrad 2 und wenigstens ein Planetenrad 3. Das Sonnenrad 1 ist hier stationär ausgebildet, während das Hohlrad 2 um eine Mittelachse 4 des Planetengetriebes drehbar gelagert ist. Das Sonnenrad 1 ist z.B. mit einer Außenverzahnung versehen, die eine erste, im wesentlichen kreisförmige und hier stationäre Bahn bildet, während das Hohlrad 2 z.B. mit einer Innenverzahnung versehen ist, die eine zweite, im wesentlichen kreisförmige und hier bewegbar gelagerte Bahn bildet, die koaxial zur ersten Bahn angeodnet ist und diese mit einem vorgewählten Abstand umgibt. Zwischen den beiden Bahnen ist das Planetenrad 3 so angeordnet, daß es an im wesentlichen diametral gegenüberliegenden Stellen mit den beiden Bahnen in Wirkverbindung steht, indem es z.B. mit einer Außenverzahnung versehen ist, die mit den Verzahnungen der beiden Bahnen des Sonnenrads 1 bzw. Hohlrad 2 kämmt.

Das Planetengetriebe weist ferner pro Planetenrad 3 eine nur schematisch dargestellte Lagerachse 5 auf, die an einem Planetenradträger oder Steg 6 befestigt und mit Abstand parallel zur Mittelachse 4 angeordnet ist. Die Lagerachse 5 bzw. das mit ihr verbundene Lager dienen zur drehbaren Lagerung des Planetenrades 3. Der Planetenradträger 6 stützt die Lagerachse 5 zweckmäßig beidseits des Planetenrades 3 mit Armen 6a, 6b ab, die drehbar um die Mittelachse 4 gelagert sind, wobei wenigstens ein Arm (z.B. 6b) von einer Antriebswelle 7 in Umdrehungen versetzt werden kann. Das hat zur Folge, daß das Planetenrad 3 an der Außenbahn des feststehenden Sonnenrads 1 abrollt und dadurch das Hohlrad 2 an seiner Innenbahn mitnimmt und in eine Drehbewegung um die Mittelachse 4 versetzt. Daher ist die in der Regel einen kleinen Durchmesser aufweisende Lagerachse 5 zugleich eine Kraftübertragungsachse, die die Kreisbewegung des Trägers 6 bzw. die auf die Lagerachse 5 des Planetenrades 3 wirkende Kraft in eine entsprechende Drehbewegung des Hohlrads 2 umwandelt. Außerdem ist die mit der Lagerachse 5 koaxiale Mittelachse des Planetenrads 3 gleichzeitig dessen Drechachse 8, um die es beim Umkreisen des Sonnenrads 1 eine Rotationsbewegung ausführt.

Bei der beschriebenen Anordnung wird das Hohlrad 2 bei einer vollen Umdrehung der Lager- bzw. Kraftübertragungsachse 5 um die Mittelachse 4 längs einer Strecke bewegt, die der doppelten Länge des Kreises entspricht, auf dem sich die Lagerachse 5 um die Mittelachse 4 dreht. Dabei gilt unabhängig von den Raddurchmessern stets π · d_{S} + π · d_{H} = 2 · π d₅, worin d_{S}, d_{H} und d₅ die Durchmesser des Sonnenrads 1, des Hohlrads 2 und des Kreises sind, auf dem sich die Lagerachse 5 bewegt. Außerdem werden die auf die Lagerachse 5 einwirkenden Kräfte nur zur Hälfte auf das Hohlrad 2 übertragen, wobei das Hohlrad 2 im Vergleich zur Lagerachse 5 die doppelte Strecke zurücklegt, weil die Kraftübertragungs- bzw. Lagerachse 5 genau mittig zwischen denjenigen beiden Punkten liegt, an denen das Planetenrad 3 mit dem Sonnen- bzw. Hohlrad 1,2 in Wirkverbindung steht.

Entsprechende Verhältsnisse ergeben sich, wenn das Hohlrad 2 stationär ist und statt dessen das Sonnenrad 1 angetrieben wird oder wenn durch Umkehrung des Kraftflusses eine Drehbewegung des Sonnenrads 2 oder des Hohrads 2 in eine Drehbewegung des Planetenträgers 6 bzw. der mit diesem gekoppelten Welle 7 umgewandelt wird.

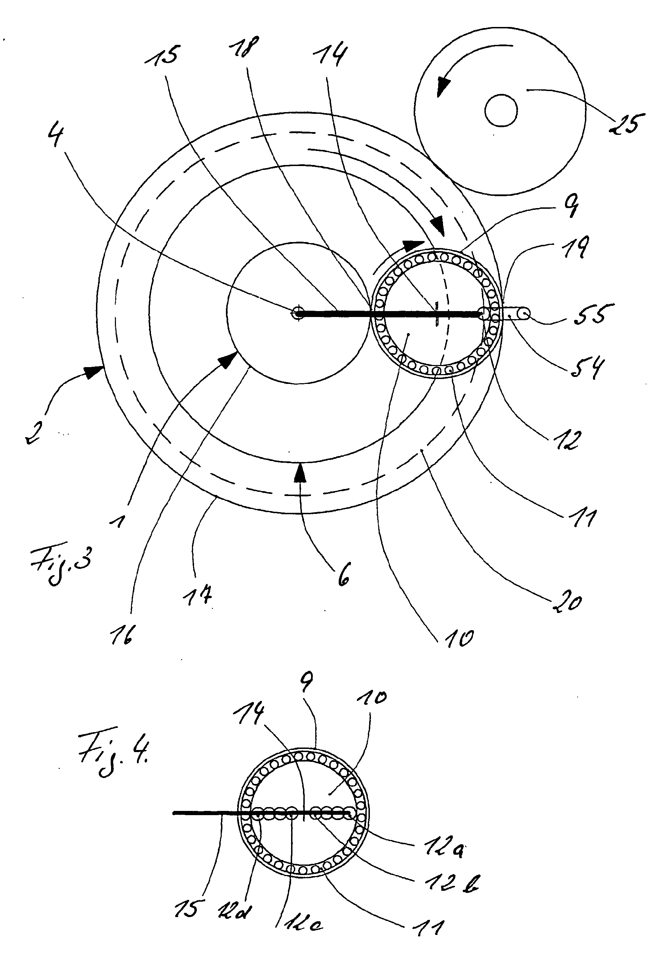

Bei dem in Fig. 2 und 3 dargstellten, erfindungsgemäßen Planetengetriebe sind das Sonnenrad 1 und das Hohlrad 2 wie in Fig. 1 ausgebildet. Auch der Außenumfang wenigstens eines Planetenrades 9 entspricht dem des Planetenrades 3 in Fig. 1. Das Planetengetriebe nach Fig. 2 und 3 unterscheidet sich jedoch durch zwei wesentliche Merkmale vom Planetengetriebe nach Fig. 1. Ein erstes Unterscheidungsmerkmal besteht darin, daß der Planetenradträger 6 pro Planetenrad 9 je eine in Fig. 2 schraffiert dargestellte Lagerachse 10 aufweist, deren Außendurchmesser nur geringfügig kleiner als der Außendurchmesser des Planetenrades 9 und dabei vorzugsweise größer ist, als der Hälfte des Außendurchmessers des Planetenrads 9 entspricht. Dabei ist das Planetenrad 9 als Ring ausgebildet und z.B. mittels eines Lagers 11 , das als Kugel-, Nadel- oder Rollenlager od. dgl. ausgebildet sein kann, drehbar auf der Lagerachse 10 gelagert. Ein zweites Unterscheidungsmerkmal besteht darin, daß zur Krafteinleitung oder Kraftableitung eine parallel zur Mittelachse 4 angeordnete Kraftübertragungsachse 12 dient, die exzentrisch zur einer Mittelachse 14 (vgl. auch Fig. 2) des Planetenrads 3 angeordnet ist. Diese Mittelachse 14 entspricht der Mittelachse 8 in Fig. 1 und ist zugleich die die Drehachse, um die sich das Planetenrad 9 auf der Lagerachse 10 drehen kann. Gemäß Fig. 2 ist die Kraftübertragungsachse 12 z.B. über einen Hebelarm 15 od. dgl. mit der Antriebswelle 7 (Fig. 2) verbunden. Bei der erfindungsgemäßen Getriebevorrichtung dient somit der um die Mittelachse 4 des Planetengetriebes drehbare Träger 6 lediglich der Aufnahme bzw. Befestigung der Lagerachse 10, wohingegen die Kraftübertragungsachse 12 als Antriebs- oder Abtriebsorgan dient, über das Kräfte ein- bzw. abgeleitet werden.

In Fig. 3 ist schematisch durch einen Kreis der eine erste Bahn 16 bildende Außenumfang des Sonnenrads 1 und durch einen weiteren Kreis der eine zweite Bahn 17 bildende Innenumfang des Hohlrads 2 angegeben. Beide Bahnen 16, 17 sind mit einem Abstand koaxial angeordnet, der dem Durchmesser des Planetenrads 9 entspricht, das an einer Stelle 18 mit der Bahn 16 und an einer Stelle 19 mit der Bahn 17 durch Zahneingriff, Reibschluß od. dgl. in Wirkverbindung steht. Wird daher die Lagerachse 10 mittels des an der Kraftübertragungsachse 12 angesetzten Hebelarms 15 (vgl. auch Fig. 2) in Umdrehungen versetzt, dann rollt das Planetenrad 9 zwar bei feststehendem Sonnenrad 1 wie in Fig. 1 an der festen Bahn 16 ab, während es gleichzeitig durch die Wirkverbindung an der Stelle 19 das Hohlrad 2 in eine Drehbewegung versetzt. Ein wesentlicher Unterschied zu Fig. 1 besteht dabei jedoch darin, daß die Kraftübertragungsachse 12 mit einem vorgewählten Abstand von Drehachse 14 des Planetenrads 3 angeordnet und an der Lagerachse 10 befestigt ist.

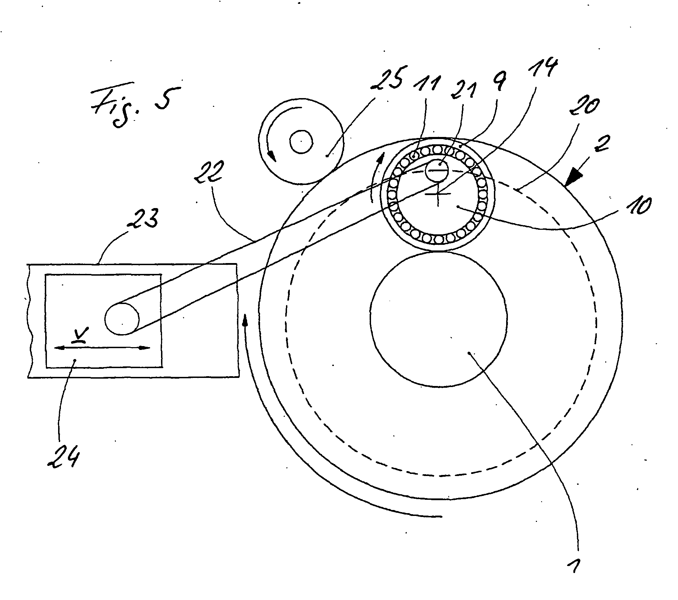

Die Kraftübertragungsachse 12 kann technisch z.B. durch die Mittelachse eines senkrecht von der Lagerachse 10 abstehenden Zapfens realisiert sein. Nach einem besonders bevorzugten Ausführungsbeispiel der Erfindung ist dieser Zapfen, wie in Fig. 4 angedeutet ist, längs eines Durchmessers verschiebbar auf der Lagerachse 10 montiert, so daß die Kraftübertragungsachse 12 je nach Bedarf mehr oder weniger weit von der Drehachse 14 des Planetenrades 3 entfernt angeordnet und in eine Vielzahl von möglichen Stellungen (z.B. 12a, 12b, 12c bzw. 12d) gebracht werden kann. Hierzu ist z.B. ein die Kraftübertragungsachse 12 realisierender Zapfen in einer diametral verlaufenden Nut der Lagerachse 10 verschiebbar und mit einer Klemmschraube od. dgl. feststellbar angeordnet.

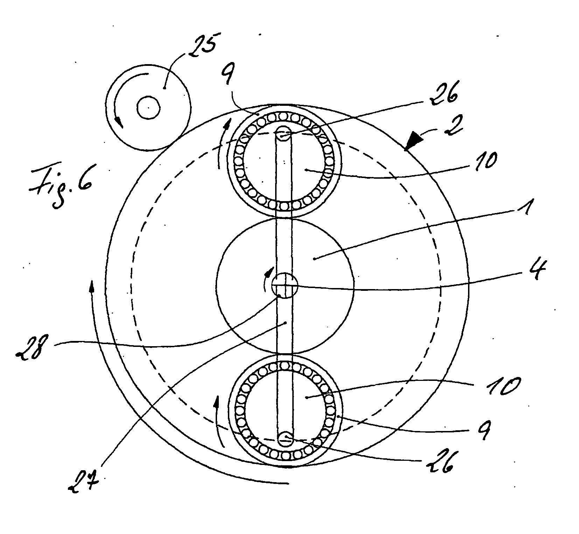

Ein besonderer Vorteil des erfindungsgemäßen Planetengetriebes besteht darin, daß die Kraftübertragungsachse 12 unabhängig davon, wo sie auf der Lagerachse 10 angeordnet wird, beim Betrieb des Planetengetriebes stets eine in Fig. 3 gestrichelt dargestellte Kreisbahn 20 um die Mittelachse 4 beschreibt. Daher ist es trotz ihrer exzentrischen Anordnung ohne weiteres möglich, sie in derselben Weise wie in Fig. 1 anzutreiben. Dies ist z.B. in Fig. 5 und 6 dargestellt. In Fig. 5 ist die Kraftübertragungsachse 12 als Zapfen 21 realisiert, der über eine Pleuelstange 22 mit einem in einem Zylinder 23 geführten Kolben 24 verbunden ist. Wird der Kolben 24 in Richtung eines Doppelpfeils v hin- und herbewegt, dann wird dadurch der Zapfen 21 bzw. die Kraftübertragungsachse auf der Kreisbahn 20 geführt mit der Folge, daß die anhand der Fig. 1 beschriebenen Bewegungen möglich sind. Handelt es sich um ein Planetengetriebe mit einem feststehenden Sonnenrad 1, dann wird z.B. das Hohlrad 2 in eine umlaufende Drehbewegung versetzt. Diese Drehbewegung kann auf ein am Außenumfang des Hohlrads 2 abrollendes weiteres Rad 25 des Planetengetriebes übertragen werden. Wird umgekehrt das Rad 25 zwangsweise angetrieben, kann diese Bewegung in eine hin- und hergehende Bewegung des Kolbens 24 umgewandelt werden. Mit dem Rad 25 kann im übrigen eine im Vergleich zur Drehzahl des Hohlrads 2 an sich beliebige Übersetzung bzw. Untersetzung bzw. Drehzahländerung herbeigeführt werden.

Beim Ausführungsbeispiel nach Fig. 6 sind auf dem Planetenradträger 6 beispielhaft zwei diametral gegenüber liegende Planetenräder 9 auf jeweils baugleichen Lagerachsen 10 drehbar gelagert. Bei diesem Beispiel weist jede Lagerachse 10 eine durch einen Zapfen 26 realisierte Kraftübertragungsachse auf, die den gleichen Abstand zur Drehachse 14 des jeweiligen Plantenrads 9 hat. Der Antrieb bzw. Abtrieb des Planetenradgetriebes erfolgt hier dadurch, daß die beiden auf der Kreisbahn 20 bewegbaren Zapfen 26 durch eine Verbindungsstange 27 miteinander verbunden sind, die auf einer der Welle 7 in Fig. 1 entsprechenden, mit der Mittelachse 4 des Planetengetriebes koaxialen Welle 28 befestigt ist. Die Welle 28 kann je nach Fall als Antriebs- oder Abtriebswelle dienen. Im übrigen entspricht die Vorrichtung nach Fig. 6 der nach Fig. 5. Alternativ können die beiden Zapfen 26 auch unterschiedliche radiale Abstände von der Mittelachse 4 haben. Außerdem kann der Antrieb oder Abtrieb analog mit Hilfe einer auf einen der Zapfen 26 wirkenden Pleuelstange erfolgen.

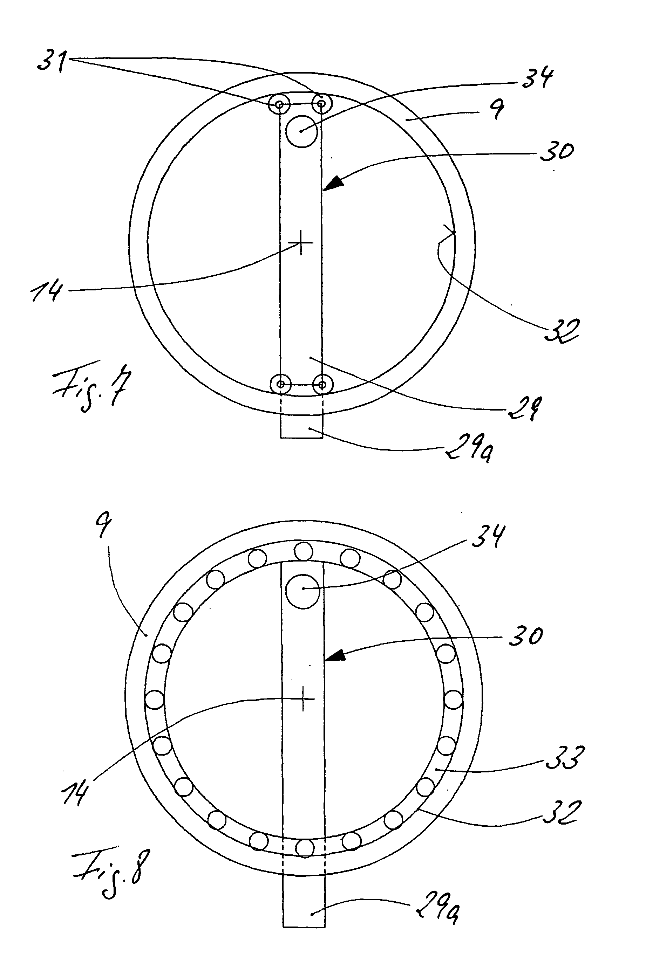

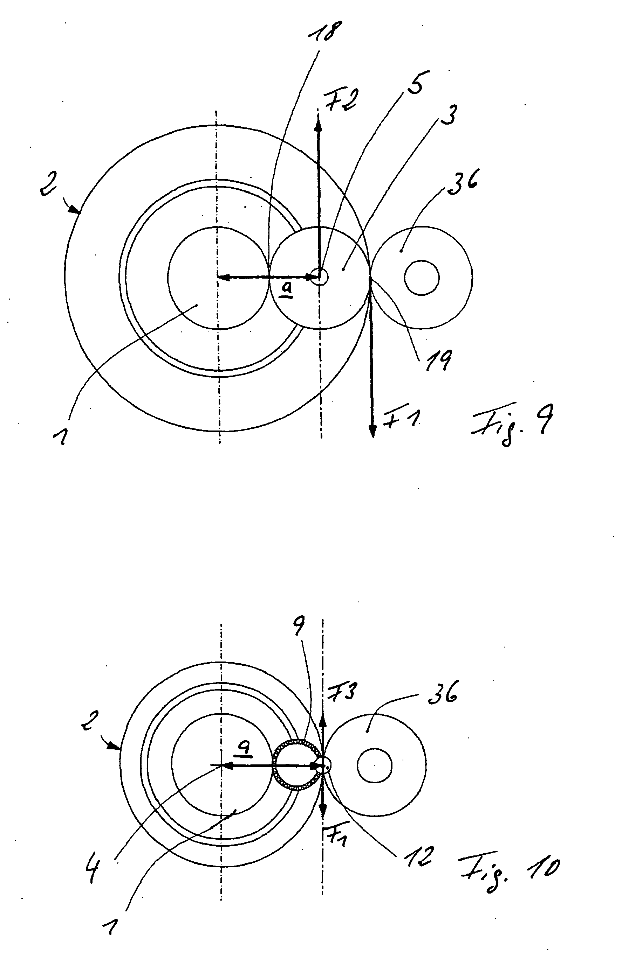

Fig. 7 und 8 zeigen zwei alternative Ausführungsbeispiele für die konstruktive Ausbildung der Lagerachse 10, die in Fig. 2 bis 6 als zylindrische Scheibe ausgebildet ist. Wie Fig. 7 zeigt, kann die zylindrische Scheibe durch einen z.B. als Flachstab 29 ausgebildetes Bauteil ersetzt sein. Dadurch wird eine stabförmige Lagerachse 30 erhalten, die an ihren Enden mit einzelnen Lagerelementen 31 in Form von Lagerkugeln, Rollen od. dgl. versehen ist, an denen ein zylindrischer Innenmantel 32 des ringförmigen Planetenrads 9 abrollen kann. Gleichzeitig kann die Lagerachse 30 durch eine Verlängerung 29a des Flachstabs 29 mit dem Träger 6 verbunden sein. Dagegen dient beim Ausführungsbeispiel nach Fig. 8 eine entsprechende stabförmige Lagerachse 30 als Träger des Innenrings eines üblichen Kugellagers 33, an dessen Außenring der Innenmantel 32 des Plantenrads 9 befestigt ist. Im übrigen entspricht die Anordnung nach Fig. 8 der nach Fig. 7. In beiden Fällen ist die Kraftübertragungsachse 12 durch einen mit ihr koaxialen Zapfen 34 realisiert, der exzentrisch zur Mittel- bzw. Drehachse 14 des Planetenrads 9 angeordnet ist.

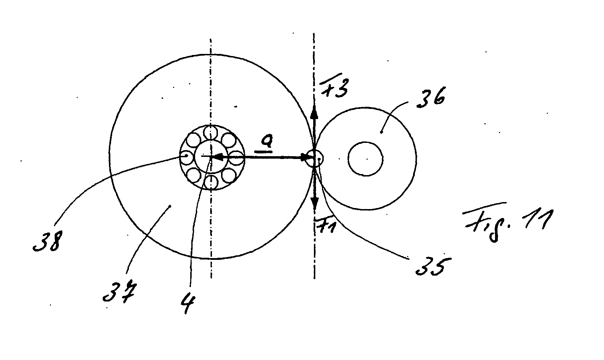

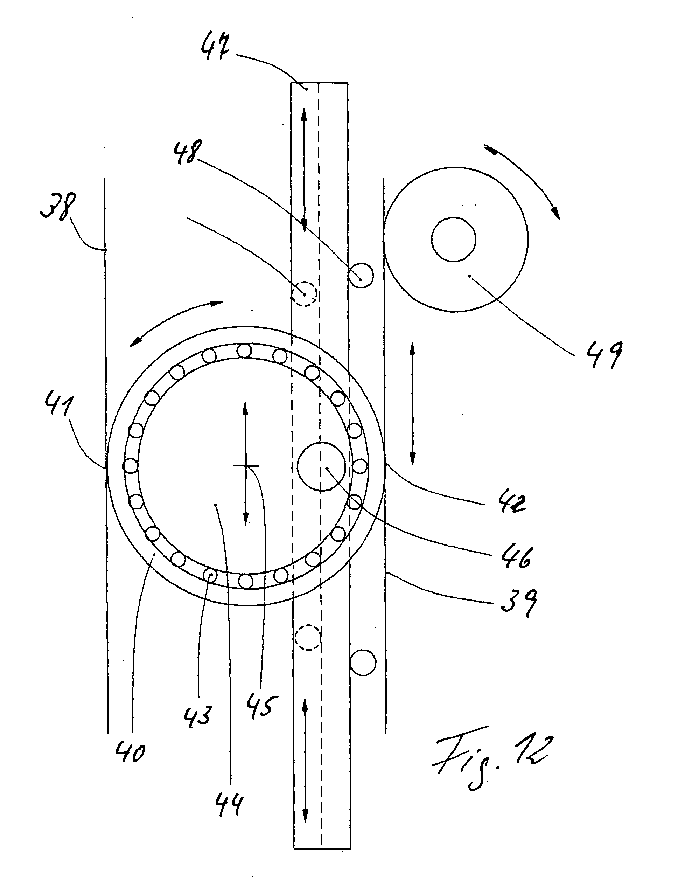

Fig. 9 bis 11 zeigen die für die Erfindung wichtigen Funktionen eines normalen Planetengetriebes (Fig. 9), eines erfindungsgemäßen Planetengetriebes (Fig. 10) und eines üblichen Kurbeltriebs (Fig. 11). Dabei ist in allen drei Fällen vorausgesetzt, daß die Kraftübertragungsachse 5, 12 bzw. 35 (Fig. 11) denselben Abstand a von Mittelachse 4 des Getriebes hat und ein zusätzliches, analog zu Fig. 5 und 6 ausgebildetes Antriebs- bzw. Abtriebsrad 36 denselben Durchmesser besitzt. Außerdem ist der Einfachheit halber für die Lage der Kraftübertragungsachse 12 bzw. 35 angenommen, daß diese den größten möglichen Abstand von der Mittelachse 4 hat und damit in Fig. 10 und 11 auch die größte mögliche Exzentrizität aufweist.

Für das bekannte Planentengetriebe nach Fig. 9 ist die Dimensionierung des Sonnenrads 1 und Hohlrads 2 so gewählt, daß sich für das Rad 36 ein Übersetzungsverhältnis von 1:4 ergibt. Für einen beispielhaft angenommenen, aus Fig. 9 ersichtlichen statischen Zustand gilt außerdem, daß eine Kraft F1, die an der Stelle 19 gemäß Fig. 3 (Wirkungseingriff zwischen Hohlrad 2 und Planetenrad 3) am Außenumfang des Hohlrads 2 wirkt, durch eine entgegen gerichtete, auf die Kraftübertragungsachse 5 wirkende Kraft F2 im Gleichgewicht gehalten werden muß, die mit F2 = 2 · F1 doppelt so groß wie die Kraft F1 ist.

Beim erfindungsgemäßen Ausführungsbeispiel nach Fig. 10 ist dagegen bei gleichem Abstand a zum Ausgleich einer entsprechenden Kraft F1 nur eine Kraft F3 = F1 erforderlich. Außerdem können hier sowohl der Durchmesser des Hohlrads 2 als auch die Durchmesser der Planetenräder 3 erheblich reduziert werden. Das sich einstellende Übersetzungsverhältnis beträgt 1:3 für das Rad 36. Wegen F1 = F3 sind auch die jeweiligen Wege gleich statt doppelt so groß wie in Fig. 9.

Bei einer als Kurbeltrieb ausgebildeten Getriebevorrichtung nach Fig. 11, bei der eine Kurbelscheibe 37 auf einem Mittellager 38 drehbar gelagert und am Umfang mit der Kraftübertragungsachse 35 versehen ist, ergibt sich ein Übersetzungsverhältnis von 1:2 bei gleicher Kraftübertragung wie in Fig. 10.

Ein wesentlicher Vorteil des erfindungsgemäßen Planetengetriebes, der sich unmittelbar aus Fig. 9 bis 11 ergibt, besteht darin, daß durch Verlagerung der Kraftübertragungsachse 12 im Sinne der Figur 4 bei sonst identischen Dimensionen völlig unterschiedliche Kraftübertragungsverhältnisse geschaffen werden können. Statt der bisherigen, nicht änderbaren Kraftaufteilung von 1/2 zu 1/2 an den Stellen 18, 19 in Fig. 9 können beim erfindungsgemäßen Getriebe beliebige andere Aufteilungen vorgesehen werden, die zu entsprechend unterschiedlichen Durchmessern der Kreisbahn 20 (Fig. 3) führen, auf der sich die Kraftübertragungsachse 12 bewegt. Theoretisch kann die Kraftaufteilung beim erfindungsgemäßen Getriebe zwischen 1:0 und 0:1 variiert werden, je nachdem, ob die Kraftübertragungsachse 12 an die Stelle 18 oder an die Stelle 19 gelegt wird. Bei einer besonders vorteilhaften Variante wird daher die Anordnung so getroffen, daß die Kraftübertragungsachse 12 auch bei laufendem Planetengetriebe je nach Bedarf zwischen den beiden möglichen Extremstellungen verschoben werden kann. Eine Anordnung der Kraftübertragungsachse 12 nahe dem Sonnenrad könnte dabei zur Erzeugung von Bremskräften bei festem Sonnenrad 1 oder zur Verbesserung der Kraftübertragung bei stehendem Hohlrad 2 vorteilhaft sein. In ähnlicher Weise kann durch Vergrößerung des Sonnenrads 1 und gleichzeitige Verkleinerung des Planetenrads 9 eine Drehzahländerung herbeigeführt werden, die beim kleinsten denkbaren Planetenrad nahe bei 1:4 liegen würde. Neben dem Vorteil, daß sich die Kraftübertragungsachse 12 unabhängig von ihrer Lage auf der Lagerachse 10 immer auf einer Kreisbahn (z. B. 20) bewegt, ergibt sich somit auch der Vorteil einer hohen Flexibilität bei der Wahl der verschiedenen Getriebeteile, da anders als bisher nicht zwei vorgewählte Getriebe alle anderen Getriebeteile festlegen. Abgesehen davon ist klar, daß die Kraftübertragungsachse 12 jeweils nur so weit an den äußeren Umfang der Lagerachse 10 gelegt werden kann, wie dies aus praktischen Gründen möglich ist.

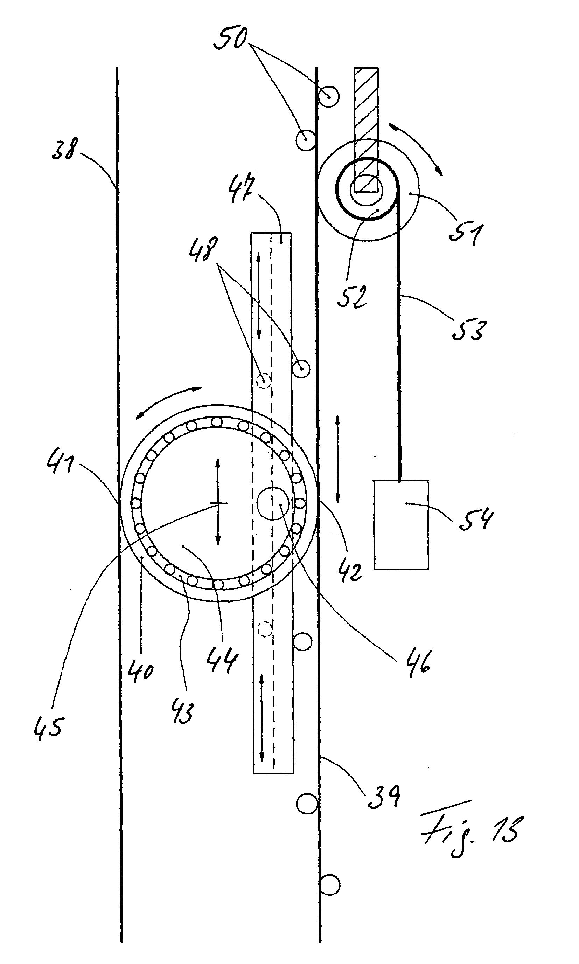

Das anhand der Fig. 2 bis 11 beschriebene Wirkungsprinzip der erfindungsgemäßen Getriebevorrichtung läßt sich in analoger Weise auch auf Getriebe mit linearen Bahnen statt Kreisbahnen übertragen. Dies wird nachfolgend beispielhaft anhand der Fig. 12 bis 14 beschrieben.

Fig. 12 zeigt eine erste, lineare, stationär angeordnete Bahn 38, die als eine Abwicklung des Außenumfangs des Sonnenrads 1 bzw. der Bahn 16 nach Fig. 3 aufgefaßt werden kann. Ihr steht parallel und mit Abstand eine zweite, ebenfalls lineare, bewegbar gelagerte Bahn 39 gegenüber, die als eine Abwicklung des Innenumfangs des Hohlrads 3 bzw. der Bahn 17 nach Fig. 3 aufgefaßt werden kann. Zwischen beiden Bahnen 38, 39 ist ein Planetenrad 40 angeordnet, dessen Umfang einerseits an einer Stelle 41 mit der stationären Bahn 38 und andererseits an einer diametral gegenüber liegenden Stelle 42 mit der bewegbaren Bahn 39 in Wirkverbindung steht. Das Planetenrad 40 ist anolog zu Fig. 2 bis 11 als schmaler Ring ausgebildet, der mittels eines Lagers 43 drehbar auf einer Lagerachse 44 gelagert ist, deren Außendurchmesser vorzugsweise nur wenig kleiner ist, als dem Außendurchmessers des Planetenrades 40 entspricht. Eine Mittelachse 45 der Lagerachse 44 ist gleichzeitig die Drehachse des Planetenrads 40. Die Lagerachse 44 kann an einem nicht näher dargestellten, parallel zu den Bahnen 38, 39 verschiebbar gelagerten Träger befestigt sein.

Analog zu Fig. 2 bis 11 ist die Lagerachse 44 außerdem mit einer extzentrisch zur Mittel- bzw. Drehachse 45 des Planetenrads 40 angeordneten Kraftübertragungsachse 46 versehen, die z. B. als Zapfen realisiert ist, der senkrecht von der als Kreisscheibe ausgebildeten Lagerachse 44 absteht. Zum An- oder Abtrieb dient schließlich ein parallel zu den Bahnen 38, 39 verschiebbares, mit der Kraftübertragungsachse 46 bzw. dem Zapfen gekoppeltes Führungselement 47, das in entsprechenden Lagern 48 verschiebbar gelagert ist. Die mit dem Führungselement 47 eingeleitete, lineare Bewegung kann mittels eines mit der Außenseite der bewegbaren Bahn 39 in Wirkverbindung stehenden Rades 49 in eine Drehbewegung umgewandelt werden, und umgekehrt kann die Drehbewegung des Rades 49 auch in eine Linearbewegung des Führungselements 47 umgewandelt werden. Im Hinblick auf die Kraftübertragung und die zurückzulegenden Wege gelten dieselben Prinzipien, wie sie oben anhand der Fig. 1 bis 11 erläutert wurden. Insbesondere ist das Führungselement 47 so ausgebildet und mittels der Lager 48 so geführt, daß es einerseits nur parallel zu den Bahnen 38, 39 bewegt werden kann, andererseits die Kraftübertragung vom Führungselement 47 auf die Lagerachse 44 bzw. umgekehrt im Bereich der Kraftübertragungsachse 46 erfolgt bzw. die zu den Bahnen 38, 39 parallele Kraftrichtung durch die Kraftübertragungsachse 46 verläuft. Daher könnten das Führungselement 47 und die Lagerachse 44 auch ohne Ausbildung eines Lagerzapfens einstückig hergestellt sein. Damit keine unerwünschten Hebelwirkungen zwischen dem Führungselement 47 und der Lagerachse 44 bzw. dem Lagerzapfen 46 erhalten werden, liegt dessen Mittelachse zweckmäßig genau auf einer gestrichelt angedeuteten Linie 47a, längs welcher das Führungselement 47 auf die Kugeln o. dgl. der Lager 48 einwirkt bzw. umgekehrt.

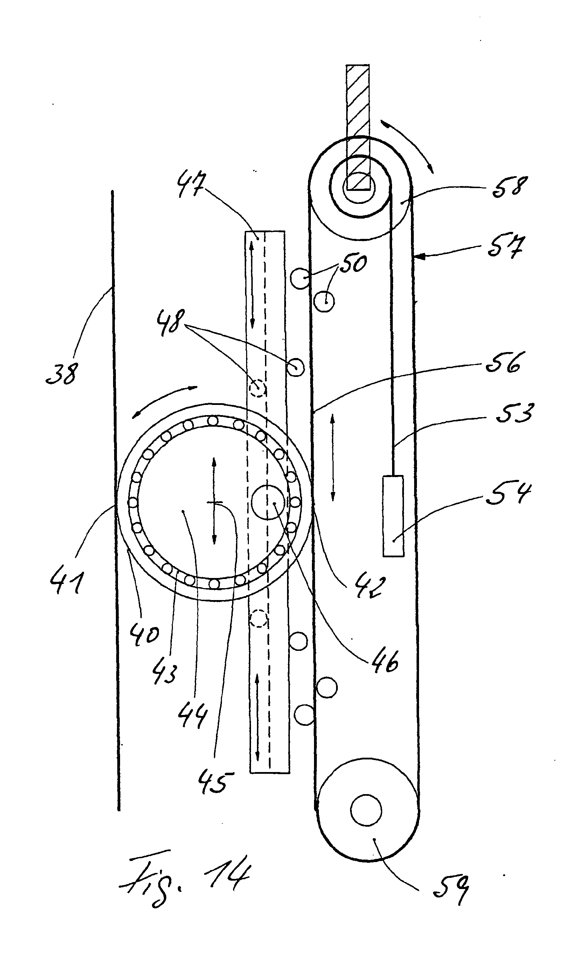

Das Ausführungsbeispiel nach Fig. 13 entspricht im wesentlichen dem Ausführungsbeispiel nach Fig. 12, weshalb gleiche Teile mit denselben Bezugszeichen versehen sind. Zusätzlich zu Fig. 12 sind schematisch Lager 50 zur Führung der bewegten Bahn 39 dargestellt. Außerdem ist schematisch eine stationär gelagerte Seilwinde 51 dargestellt, die dem Rad 49 in Fig. 12 entspricht und mit der bewegten Bahn 39 in Wirkverbindung steht. Die Seilwinde 51 enthält einen Wickelkörper 52 für ein Seil 53, das durch Verschiebung des Führungselements 47 auf den Wickelkörper 52 aufgewickelt oder von diesem abgewickelt werden kann. Am Seilende befindet sich eine Last 54, womit angedeutet werden soll, daß die erfindungsgemäße Getriebevorrichtung nach Fig. 13 z. B. nach Art eines Aufzugs zum Heben von Lasten verwendet werden kann.

Das Ausführungsbeispiel nach Fig. 14 entspricht im wesentlichen dem Ausführungsbeispiel nach Fig. 13, weshalb gleiche Teile mit denselben Bezugszeichen versehen sind. Im Unterschied zu Fig. 13 ist eine bewegbare Bahn 56 als das gerade Trum eines endlosen Elements 57 in Form einer Kette, eines Seils oder eines Riemens ausgebildet. Das Element 57 ist auf zwei Umlenkrädern 58, 59 (Kettenrädern bzw. Riemenscheiben) umlaufend geführt. Eines dieser Umlenkräder ist analog zu Fig. 13 als Seilwinde ausgebildet und mit dem Wickelkörper 52 für das Seil 53 versehen. Das Planetenrad 40 ist für den Fall, daß das Element 57 eine Kette ist, mit einer Außenverzahnung versehen, die direkt in das mit ihm in Wirkverbindung stehende Kettentrum eingreift, während die Bahn 38 in diesem Fall eine Zahnstange ist. Besteht das Element 57 aus einem Riemen, ist das Planetenrad 40 als Reibrolle od. dgl. und die Bahn 38 als Rollbahn ausgebildet.

Die Erfindung ist nicht auf die beschriebenen Ausführungsbeispiele beschränkt, die auf vielfache Art und Weise abgewandelt werden können. Dies gilt insbesondere für die beispielhaft angegebenen Dimensionierungen und relativen Anordnungen der verschiedenen Teile zueinander. Das Planetengetriebe kann beispielsweise auch mit mehr als einem oder zwei Planetenrädern ausgestattet werden. Ferner kann die Lagerachse anders gestaltet werden, als in Fig. 3, 7 und 8 angedeutet ist. Insbesondere ist es möglich, die Lagerachse mehrteilig auszubilden. Dabei kann es besonders zweckmäßig sein, sie mit zwei koaxialen, axial hintereinander liegenden Teilen zu versehen, die durch ein Federelement miteinander verbunden sind. Damit können stoßartig auf eines der Teile wirkende Kräfte abgefedert werden, bevor sie auf das andere Teil einwirken. Außerdem kann es vorteilhaft sein, das Hohlrad 2 am Außenumfang als Antriebs- oder Abtriebsorgan auszubilden, indem es z. B. mit einer umlaufenden Verzahnung oder dgl. versehen wird. Alternativ kann das Antriebs- oder Abtriebsorgan aber auch aus einer Mehrzahl von koaxial hintereinander angeordneten, mit unterschiedlichen Durchmessern versehenen Rädern, insbesondere Zahnrädern bestehen, um auf einfache Weise unterschiedliche Übersetzungsverhältnisse zu ermöglichen. Der Planetenradträger 6 kann anstatt als kreisrunde Scheibe, wie in Fig. 3 angedeutet ist, auch als Hebelarm oder sonstwie gestaltet sein. Weiter ist klar, daß die Bahnen 38, 39 in Fig. 12 bis 14 nicht exakt gerade ausgebildet sein müssen, sondern auch längs eines Bogens verlaufen können. Dabei können die Bahnen 38, 39 z. B. aus Zahnstangen, Ketten, Rollflächen oder dgl. bestehen, die mit Planentenrädern 40 in Form von Zahn- oder Reibrädern in Wirkverbindung stehen. Weiter ist klar, daß die Kraftübertragungsverhältnisse noch dadurch verbessert werden können, daß mit der Kraftübertragungsachse 12, wie in Fig. 3 angedeutet ist, eine Kurbel 54 mit einem parallel zur Kraftübertragungsachse 12 angeordneten Kurbelarm 55 befestigt wird. Schließlich versteht sich, daß die verschiedenen Merkmale auch in anderen als den beschriebenen und dargestellten Kombinationen angewendet werden können.

## Patentansprüche

1. Getriebevorrichtung, enthaltend: zwei parallele Bahnen (16, 17; 38, 39), von denen die eine stationär angeordnet und die andere bewegbar gelagert ist, wenigstens ein zwischen den beiden Bahnen (16, 17; 38, 39, 56) angeordnetes, an seinem Umfang mit beiden Bahnen (16, 17; 38, 39, 56) in Wirkverbindung stehendes und eine Drehachse (14, 45) aufweisendes Planetenrad (9,40), eine parallel zu den beiden Bahnen (16, 17; 38, 39, 56) bewegbare, mit der Drehachse (14, 45) koaxiale Lagerachse (10, 30, 44), um die das Planetenrad (9, 40) drehbar gelagert ist, und eine exzentrisch an der Lagerachse (10, 30, 44) angeordnete Kraftübertragungsachse (12, 46), wobei die Anordnung derart getroffen ist, daß das Planetenrad (9, 40) durch Abrollen an der stationär angeordneten Bahn (z. B. 16, 38) sowohl Bewegungen der Kraftübertragungsachse (12, 46) auf die beweglich gelagerte Bahn (z. B. 17, 39, 56) als auch umgekehrt Bewegungen der beweglichen Bahn (17, 39, 56) auf die Kraftübertragungsachse (12, 46) übertragen kann, **dadurch gekennzeichnet, daß** die Kraftübertragungsachse (12, 46) mit einem solchen, fest vorgegebenen Abstand von der Drehachse (14, 45) angeordnet ist, daß sich vorgewählte Kraftübertragungsverhältnisse ergeben.

2. Getriebevorrichtung nach Anspruch 1, **dadurch gekennzeicht, daß** die Lagerachse (10, 30, 44) einen Durchmesser aufweist, der zwischen dem 0,5- fachen und dem 1-fachen Wert des Durchmessers des Planetenrads (9, 40) liegt, und daß das Planetenrad (9,40) als ein drehbar auf der Lagerachse (10, 30, 44) gelagerter Ring ausgebildet ist.

3. Getriebevorrichtung nach einem der Ansprüche 1 oder 2, **dadurch gekennzeichnet, daß** der Abstand der Kraftübertragungsachse (12, 46) von der Drehachse veränderbar ist.

4. Getriebevorrichtung nach einem der Ansprüche 1 bis 3, **dadurch gekennzeichnet, daß** sie als Planetengetriebe ausgebildet ist.

5. Getriebevorrichtung nach Anspruch 4, **dadurch gekennzeichnet, daß** die stationär angeordnete Bahn (16) durch den Außenumfang eines Sonnenrads (1) und die bewegbar gelagerte Bahn (17) durch den Innenumfang eines Hohlrades (2) des Planetengetriebes gebildet ist.

6. Getriebevorrichtung nach Anspruch 4, **dadurch gekennzeichnet, daß** die stationär angeordnete Bahn (17) durch den Innenumfang eines Hohlrades (2) und die bewegbar gelagerte Bahn (16) durch den Außenumfang eines Sonnenrades (1) des Planentengetriebes gebildet ist.

7. Getriebevorichtung nach einem der Ansprüche 4 bis 6, **dadurch gekennzeichnet, daß** die Lagerachse (10) an einem um die Mittelachse (4) des Planetengetriebes drehbar gelagerten Planetenradträger (6) befestigt ist.

8. Getriebevorrichtung nach einem der Ansprüche 4 bis 7, **dadurch gekennzeichnet, daß** die Kraftübertragungsachse (12) als ein von der Lagerachse (10) abstehender Zapfen (26) ausgebildet und mit einem Verbindungshebel (27) gekoppelt ist, der auf einer um die Mittelachse (4) des Planetengetriebes drehbar gelagerten Antriebswelle (28) sitzt.

9. Getriebevorrichtung nach einem der Anspüche 4 bis 7, **dadurch gekennzeichnet, daß** die Kraftübertragungsachse als ein von der Lagerachse (10) abstehender Zapfen (21) ausgebildet und mit einer Pleuelstange (22) eines Kurbeltriebs gekoppelt ist.

10. Getriebevorrichtung nach einem der Ansprüche 4 bis 9, **dadurch gekennzeichnet, daß** das Hohlrad (2) am Außenumfang als Antriebs- oder Abtiebsorgan ausgebildet ist.

11. Getriebevorrichtung nach Anspruch 10, **dadurch gekennzeichnet, daß** das Antriebs- oder Abtriebsorgan eine Mehrzahl von koaxial hintereinander angeordneten, mit unterschiedlichen Durchmessern versehenen Antriebs- oder Abtriebsrädern aufweist.

12. Getriebevorrichtung nach einem der Ansprüche 10 oder 11, **dadurch gekennzeichnet, daß** sie wenigstens ein mit dem Antriebs- oder Abtriebsorgan in Wirkverbindung stehendes, drehbares Rad (25) enthält.

13. Getriebevorrichtung nach einem der Ansprüche 1 bis 3, **dadurch gekennzeichnet, daß** die beiden Bahnen (38, 39, 56) linear oder bogenförmig ausgebildet sind.

14. Getriebevorrichtung nach Anspruch 13, **dadurch gekennzeichnet, daß** sie ein parallel zu den Bahnen (38, 39, 56) verschiebbar gelagertes, im Bereich der Kraftübertragungsachse (46) an die Lagerachse (44) gekoppeltes, stabförmiges Führungselement (47) enthält.

15. Getriebevorrichtung nach Anspruch 13 oder 14, **dadurch gekennzeichnet, daß** das Führungselement (47) zur Vermeidung unerwünschter Hebelwirkungen zwischen ihm und der Kraftübertragungsachse (46) in Lagern (48) gelagert ist, deren Wirklinien (47a) im wesentlichen in derselben Ebene wie die Kraftübertragungsachse (46) liegen.

16. Getriebevorrichtung nach einem der Ansprüche 13 bis 15, **dadurch gekennzeichnet, daß** sie wenigstens ein drehbares Antriebs- oder Abtriebsrad (49, 51) enthält, das mit einer vom Planetenrad (40) abgewandten Seite der beweglichen Bahn (39) in Wirkverbindung steht.

17. Getriebevorrichtung nach einem der Ansprüche 13 bis 16, **dadurch gekennzeichnet, daß** die Bahnen (38, 39, 56) als Zahnstangen, Ketten, Seile oder Rollflächen ausgebildet sind.

18. Getriebevorrichtung nach einem der Ansprüche 1 bis 17, **dadurch gekennzeichnet, daß** die Lagerachse (10, 30, 44) aus wenigstens zwei durch eine Feder gekoppelten Teilen besteht.

## Claims

1. Gear device, containing: two parallel paths (16, 17; 38, 39), of which one is disposed in a stationary manner and the other is mounted moveably, at least one planet wheel (9, 40) which is disposed between the two paths (16, 17; 38, 39, 56), is in operational connection at its circumference with the two paths (16, 17; 38, 39, 56) and has a rotational axle (14, 45), a bearing axle (10, 30, 44) which is moveable parallel to the two paths (16, 17; 38, 39, 56) and coaxial with the rotational axle (14, 45), about which bearing axle the planet wheel (9, 40) is mounted rotatably, and a power transmission axle (12, 46) which is disposed eccentrically on the bearing axle (10, 30, 44), the arrangement being such that the planet wheel (9, 40) can transmit, by means of rolling on the path (for example 16, 38) which is disposed in a stationary manner, both movements of the power transmission axle (12, 46) to the moveably mounted path (for example 17, 39, 56) and conversely movements of the moveable path (17, 39, 56) to the power transmission axle (12, 46), **characterised in that** the power transmission axle (12, 46) is disposed with such a fixed prescribed spacing from the rotational axle (14, 45) that preselected power transmission ratios are produced.

2. Gear device according to claim 1, **characterised in that** the bearing axle (10, 30, 44) has a diameter which is between 0.5 times and 1 times the value of the diameter of the planet wheel (9, 40), and **in that** the planet wheel (9, 40) is configured as a ring which is mounted rotatably on the bearing axle (10, 30, 44).

3. Gear device according to one of the claims 1 or 2, **characterised in that** the eccentric position of the power transmission axle (12, 46) is adjustable.

4. Gear device according to one of the claims 1 to 3, **characterised in that** it is configured as a planetary gear.

5. Gear device according to claim 4, **characterised in that** the path (16) which is disposed in a stationary manner is formed by the external circumference of a sun wheel (1) and the moveably mounted path (17) is formed by the internal circumference of a ring gear (2) of the planetary gear.

6. Gear device according to claim 4, **characterised in that** the path (17) which is disposed in a stationary manner is formed by the internal circumference of a ring gear (2) and the moveably mounted path (16) is formed by the external circumference of a sun wheel (1) of the planetary gear.

7. Gear device according to one of the claims 4 to 6, **characterised in that** the bearing axle (10) is mounted on a planet carrier (6) which is mounted rotatably about the central axle (4) of the planetary gear.

8. Gear device according to one of the claims 4 to 7, **characterised in that** the power transmission axle (12) is configured as a pin (26) which protrudes from the bearing axle (10) and is coupled to a connection lever (27), which is positioned on a drive shaft (28) which is mounted rotatably about the central axle (4) of the planetary gear.

9. Gear device according to one of the claims 4 to 7, **characterised in that** the power transmission axle is configured as a pin (21) which protrudes from the bearing axle (10) and is coupled to a connecting rod (22) of a crank drive.

10. Gear device according to one of the claims 4 to 9, **characterised in that** the ring gear (2) is configured on the external circumference as actuation or power take-off element.

11. Gear device according to claim 10, **characterised in that** the actuation or power take-off element has a plurality of actuation or power take-off wheels which are disposed coaxially one behind the other and provided with different diameters.

12. Gear device according to one of the claims 10 or 11, **characterised in that** it contains at least one rotatable wheel (25) which is in operational connection with the actuation or power take-off element.

13. Gear device according to one of the claims 1 to 3, **characterised in that** both paths (38, 39, 56) have a linear or arcuate configuration.

14. Gear device according to claim 13, **characterised in that** it contains a bar-shaped guide element (47) which is mounted displaceably parallel to the paths (38, 39, 56) and is coupled to the bearing axle (44) in the region of the power transmission axle (46).

15. Gear device according to claim 13 or 14, **characterised in that** the guide element (47) is mounted in bearings (48) in order to avoid undesired lever effects between it and the power transmission axle (46), the lines of action (47a) of which bearings are essentially in the same plane as the power transmission axle (46).

16. Gear device according to one of the claims 13 to 15, **characterised in that** it contains at least one rotatable actuation or power take-off wheel (49, 51) which is in operational connection with a side of the moveable path (39) which is orientated away from the planet wheel (40).

17. Gear device according to one of the claims 13 to 16, **characterised in that** the paths (38, 39, 56) are configured as toothed racks, chains, cables or rolling faces.

18. Gear device according to one of the claims 1 to 17, **characterised in that** the bearing axle (10, 30, 44) comprises at least two parts which are coupled by means of a spring.

## Revendications

1. Dispositif d'engrenage englobant : deux pistes parallèles (16, 17 ; 38, 39) dont l'une occupe une position fixe et l'autre est montée mobile ; au moins un pignon satellite (9, 40) interposé entre les deux pistes (16, 17 ; 38, 39, 56), en liaison opérante avec les deux pistes (16, 17 ; 38, 39, 56) sur son pourtour, et muni d'un axe de rotation (14, 45) ; un axe de palier (10, 30, 44) coaxial à l'axe de rotation (14, 45), mobile parallèlement aux deux pistes (16, 17 ; 38, 39, 56) et autour duquel le pignon satellite (9, 40) est monté à rotation ; et un arbre (12, 46) de transmission de forces à montage excentré sur l'axe de palier (10, 30, 44), l'ensemble étant agencé de façon telle que, suite à un roulement contre la piste (16, 38, par exemple) occupant une position fixe, le pignon satellite (9, 40) puisse, à la fois, répercuter des mouvements de l'arbre (12, 46) de transmission de forces sur la piste (17, 39, 56, par exemple) montée mobile et, inversement, des mouvements de ladite piste mobile (17, 39, 56) sur ledit arbre (12, 46) de transmission de forces, **caractérisé par le fait que** l'arbre (12, 46) de transmission de forces est disposé, par rapport à l'axe de rotation (14, 45), à une distance fermement préétablie propre à conférer des rapports présélectionnés de transmission de forces.

2. Dispositif d'engrenage selon la revendication 1, **caractérisé par le fait que** l'axe de palier (10, 30, 44) offre un diamètre dont la valeur est comprise entre 0,5 fois et 1 fois la valeur du diamètre du pignon satellite (9, 40) ; et **par le fait que** ledit pignon satellite (9, 40) est réalisé sous la forme d'une bague montée à rotation sur ledit axe de palier (10, 30, 44).

3. Dispositif d'engrenage selon l'une des revendications 1 ou 2, **caractérisé par** la faculté de faire varier la distance séparant l'arbre (12, 46) de transmission de forces d'avec l'axe de rotation.

4. Dispositif d'engrenage selon l'une des revendications 1 à 3, **caractérisé par le fait qu**'il est réalisé sous la forme d'un train épicycloïdal.

5. Dispositif d'engrenage selon la revendication 4, **caractérisé par le fait que** la piste (16) occupant une position fixe est matérialisée par le pourtour extérieur d'une roue planétaire (1), et la piste (17) montée mobile est matérialisée par le pourtour intérieur d'un pignon creux (2) du train épicycloïdal.

6. Dispositif d'engrenage selon la revendication 4, **caractérisé par le fait que** la piste (17) occupant une position fixe est matérialisée par le pourtour intérieur d'un pignon creux (2), et la piste (16) montée mobile est matérialisée par le pourtour extérieur d'une roue planétaire (1) du train épicycloïdal.

7. Dispositif d'engrenage selon l'une des revendications 4 à 6, **caractérisé par le fait que** l'axe de palier (10) est fixé à un support (6) de pignon satellite monté, avec faculté de rotation, autour de l'axe médian (4) du train épicycloïdal.

8. Dispositif d'engrenage selon l'une des revendications 4 à 7, **caractérisé par le fait que** l'arbre (12) de transmission de forces est réalisé sous la forme d'un tenon (26) saillant au-delà de l'axe de palier (10), et est accouplé à un levier de solidarisation (27) calé sur un arbre d'entraînement (28) monté rotatif autour de l'axe médian (4) du train épicycloïdal.

9. Dispositif d'engrenage selon l'une des revendications 4 à 7, **caractérisé par le fait que** l'arbre de transmission de forces est réalisé sous la forme d'un tenon (21) saillant au-delà de l'axe de palier (10), et est accouplé à une bielle (22) d'un entraînement par manivelle.

10. Dispositif d'engrenage selon l'une des revendications 4 à 9, **caractérisé par le fait que** le pignon creux (2) est réalisé, sur son pourtour extérieur, sous la forme d'un organe menant ou mené.

11. Dispositif d'engrenage selon la revendication 10, **caractérisé par le fait que** l'organe menant ou mené présente une pluralité de pignons menants ou menés, agencés en succession coaxiale et pourvus de diamètres différents.

12. Dispositif d'engrenage selon l'une des revendications 10 ou 11, **caractérisé par le fait qu**'il renferme au moins un pignon rotatif (25) en liaison opérante avec l'organe menant ou mené.

13. Dispositif d'engrenage selon l'une des revendications 1 à 3, **caractérisé par le fait que** les deux pistes (38, 39, 56) sont de réalisation rectiligne ou en arc de cercle.

14. Dispositif d'engrenage selon la revendication 13, **caractérisé par le fait qu**'il renferme un élément de guidage (47) en forme de tige, monté coulissant parallèlement aux pistes (38, 39, 56) et accouplé à l'axe de palier (44) dans la région de l'arbre (46) de transmission de forces.

15. Dispositif d'engrenage selon la revendication 13 ou 14, **caractérisé par le fait que**, pour éviter d'indésirables effets de levier entre l'élément de guidage (47) et l'arbre (46) de transmission de forces, ledit élément de guidage (47) est monté dans des paliers (48) dont les lignes d'action (47a) se trouvent, pour l'essentiel, dans le même plan que ledit arbre (46) de transmission de forces.

16. Dispositif d'engrenage selon l'une des revendications 13 à 15, **caractérisé par le fait qu**'il renferme au moins un pignon rotatif menant ou mené (49, 51), en liaison opérante avec un côté de la piste mobile (39) qui est tourné à l'opposé du pignon satellite (40).

17. Dispositif d'engrenage selon l'une des revendications 13 à 16, **caractérisé par le fait que** les pistes (38, 39, 56) se présentent comme des crémaillères, des chaînes, des câbles ou des surfaces de roulement.

18. Dispositif d'engrenage selon l'une des revendications 1 à 17, **caractérisé par le fait que** l'axe de palier (10, 30, 44) se compose d'au moins deux parties accouplées par l'intermédiaire d'un ressort.
